# EUROPÄISCHE PATENTSCHRIFT

(11) **EP 3 508 365 B1**
(45) Veröffentlichungstag und Bekanntmachung des Hinweises auf die Patenterteilung: **29.07.2020**
(21) Anmeldenummer: 18212176.4
(22) Anmeldetag: 13.12.2018
(51) Int. Cl.: B60H 1/22, B60H 1/00, B60J 11/04

(54) **FAHRZEUGHEIZSYSTEM**
VEHICLE HEATING SYSTEM
SYSTÈME DE CHAUFFAGE DE VÉHICULE

(30) Priorität: 04.01.2018 DE 102018100118; 17.01.2018 DE 102018100903
(43) Veröffentlichungstag der Anmeldung: 10.07.2019
(73) Patentinhaber: Eberspächer Climate Control Systems GmbH & Co. KG, 73730 Esslingen (DE)
(72) Erfinder: Keefer, Jörg, 71384 Weinstadt (DE)
(74) Vertreter: Ruttensperger Lachnit Trossin Gomoll

(56) Entgegenhaltungen:
- WO-A1-2007/097650
- CN-A- 106 904 059
- DE-U1-202016 005 199
- GB-A- 2 529 915
- US-A1- 2016 288 635

## Beschreibung

Die vorliegende Erfindung betrifft ein Fahrzeugheizsystem, das dazu eingesetzt werden kann, ein abgestelltes Fahrzeug zu erwärmen.

Derartige im Allgemeinen auch als Standheizungen bezeichnete Fahrzeugheizsysteme sind so gestaltet, dass ein Wärme auf ein zu erwärmendes Medium übertragendes, brennstoffbetriebenes Heizgerät in einem Fahrzeug, im Allgemeinen im Bereich eines Motorraums, fest verbaut ist. Das Heizgerät ist an ein Mediumleitsystem des Fahrzeugs angeschlossen, beispielsweise um durch das Heizgerät erwärmte Luft über dieses Mediumleitsystem in einen Fahrzeuginnenraum einzuleiten oder erwärmte Flüssigkeit in den Kühlflüssigkeitskreislauf einer Brennkraftmaschine eines Fahrzeugs einzuleiten. Auch ist das Heizgerät an das elektrische Bordsystem eines Fahrzeugs angeschlossen, einerseits um das Heizgerät, insbesondere ein diesem zugeordnetes Ansteuergerät oder/und eine Pumpe zum Fördern von Brennstoff zu dem Fahrzeugheizgerät, mit elektrischer Energie zu speisen, andererseits um dem Heizgerät Information über den Betriebszustand eines Fahrzeugs, insbesondere den thermischen Zustand, zu übermitteln.

Ein Fahrzeugheizsystem gemäß dem Oberbegriff des Anspruchs 1 ist aus der WO 2007/097650 A1 bekannt.

Es ist die Aufgabe der vorliegenden Erfindung, ein Fahrzeugheizsystem vorzusehen, welches bei einfachem Aufbau eine hohe Flexibilität im Betrieb und gleichwohl ein gutes Heizvermögen für ein zu erwärmendes Fahrzeug aufweist.

Erfindungsgemäß wird diese Aufgabe gelöst durch ein Fahrzeugheizsystem gemäß Anspruch 1. Dieses umfasst:
- einen an einem Fahrzeug angebrachten oder anbringbaren Heizungsaufnahmebehälter,
- ein in dem Heizungsaufnahmebehälter angeordnetes, brennstoffbetriebenes Heizgerät,
- einen in dem Heizungsaufnahmebehälter angeordneten Brennstofftank für das Heizgerät.

Für eine vor allem hinsichtlich des Schutzes eines zu erwärmenden Fahrzeugs und auch hinsichtlich der thermischen Effizienz besonders vorteilhaften Ausgestaltung ist eine ein Fahrzeug wenigstens teilweise umkleidende, flexible Hülle an den Heizungsaufnahmebehälter angebunden. Eine derartige Umhüllung sorgt nicht nur dafür, dass das vom Heizgerät abgegebene, erwärmte Medium die darin transportierte Wärme effizient auf das Fahrzeug überträgt und Wärmeverluste nach außen weitestgehend vermieden werden, sondern verhindert insbesondere im Winter auch die Eisbildung an der Außenseite eines Fahrzeugs.

Dabei wird das von dem Heizgerät abgegebene Medium in einen von der Hülle umkleideten Innenraum oder/und in in der Hülle vorgesehene Mediumleitkanäle abgegeben.

Das erfindungsgemäß aufgebaute Fahrzeugheizsystem ist mit seinen wesentlichen Systemkomponenten als von einem Fahrzeug grundsätzlich unabhängig aufgebautes System ausgestaltet. Dies bedeutet, dass das Fahrzeugheizsystem auch grundsätzlich unabhängig von einem Fahrzeug betrieben werden kann. Aufgrund dieser baulichen und funktionalen Trennung des Fahrzeugheizsystems von einem Fahrzeug ist es einerseits leicht möglich, ein derartiges Fahrzeugheizsystem bei jedem beliebigen Fahrzeug nachzurüsten bzw. ein derartiges Fahrzeugheizsystem in Verbindung mit verschiedensten Fahrzeugen zu betreiben. Das Fahrzeugheizsystem muss nicht mit einem Fahrzeug mitgeführt werden. Das Heizsystem bzw. zumindest Teile davon können beispielsweise in einer Garage verbleiben, wenn ein mit einem derartigen System zu erwärmendes Fahrzeug im Fahrbetrieb betrieben wird.

Da das erfindungsgemäße Fahrzeugheizsystem bzw. wesentliche Systembereiche davon in einem dafür eigens vorgesehenen Heizungsaufnahmebehälter untergebracht ist bzw. sind, wird am bzw. im Fahrzeug selbst kein wesentlicher Bauraum dafür erforderlich. Somit entfallen sowohl die Kosten für die Integration eines Fahrzeugheizsystems in ein Fahrzeug, als auch der Aufwand, der dafür erforderlich ist, ein Fahrzeugheizsystem an ein elektrisches System eines Fahrzeugs, zum Beispiel das Bordspannungssystem oder das Datenübertragungssystem, anzukoppeln. Ein weiterer Vorteil liegt darin, dass ein im Inneren des Heizungsaufnahmebehälters gebildetes Volumen auch zur Aufnahme anderer, beispielsweise mit einem Fahrzeug zu transportierender Gegenstände genutzt werden kann.

Um das Fahrzeugheizsystem weiter unabhängig von Systembereichen eines Fahrzeugs zu machen, wird vorgeschlagen, dass dem Heizgerät ein in dem Heizungsaufnahmebehälter angeordnetes Ansteuergerät oder/und eine in dem Heizungsaufnahmebehälter angeordnete Brennstoffpumpe oder/und wenigstens ein elektrischer Energiespeicher zugeordnet ist. Insbesondere das Vorsehen wenigstens eines von einem Fahrzeug unabhängigen elektrischen Energiespeichers führt zu dem Vorteil, dass ein Bordspannungssystem eines Fahrzeugs durch das Fahrzeugheizsystem nicht belastet wird. Gleiches gilt auch für den zum Betrieb eines Fahrzeugs vorgesehenen Kraftstoff, da dem Heizgerät ein von einem Fahrzeug unabhängiger Brennstofftank zugeordnet ist. Dies gestattet es, das Heizgerät auch mit einem anderen, beispielsweise im Verbrennungsbetrieb zu einem geringeren Schadstoffausstoß führenden Brennstoff zu betreiben, als eine Brennkraftmaschine eines Fahrzeugs. Durch diese bauliche und funktionale Entkopplung des Fahrzeugheizsystem vom Fahrzeug eignet sich dieses insbesondere auch als Standheizung für elektrisch betriebene Fahrzeuge, welche im Allgemeinen keinen Brennstofftank aufweisen.

Für eine platzsparende Ausgestaltung wird vorgeschlagen, dass wenigstens ein elektrischer Energiespeicher in dem Heizungsaufnahmebehälter angeordnet ist. Weiter kann vorgesehen sein, dass wenigstens ein elektrischer Energiespeicher in einem den Heizungsaufnahmebehälter tragenden Fahrzeug angeordnet ist, wobei eine elektrische Verbindung mit dem Heizgerät durch eine aus dem Fahrzeug heraus zu führende Leitung herzustellen ist. Um unabhängig vom Betrieb eines Fahrzeugs einen derartigen elektrischen Energiespeicher wieder aufladen zu können, wird vorgeschlagen, dass wenigstens ein elektrischer Energiespeicher von dem Fahrzeugheizsystem entfernbar und an dieses über eine Schnittstelle elektrisch anschließbar ist. Ein von dem Fahrzeugheizsystem bzw. einem Fahrzeug entfernter Energiespeicher kann dann zum Aufladen beispielsweise während des Fahrbetriebs des Fahrzeugs, also dann, wenn das Fahrzeugheizsystem nicht zu betreiben ist, an das in einer Garage oder einem Gebäude vorhandene elektrische Netz angeschlossen werden.

Bei einer Ausgestaltungsvariante kann vorgesehen sein, dass wenigstens einem elektrischen Energiespeicher eine Ladeeinheit zugeordnet ist.

Beispielsweise kann eine derartige Ladeeinheit ein an dem Heizungsaufnahmebehälter vorzugsweise positionsveränderbar getragenes Solarmodul oder/und eine an dem Heizungsaufnahmebehälter vorzugsweise positionsveränderbar getragene Windradeinheit umfassen. Somit wird es möglich, auch während des Heizbetriebs oder während des Fahrbetriebs eines Fahrzeugs durch die Ladeeinheit den wenigstens einen elektrischen Energiespeicher wieder aufzuladen. Besonders vorteilhaft ist dabei die positionsveränderbare Anordnung eines Solarmoduls bzw. einer Windradeinheit am Heizungsaufnahmebehälter, da dadurch, insbesondere auch von einer jeweiligen Ladeeinheit selbstständig durchgeführt, eine optimale Ausrichtung bezüglich der Sonne oder eines Luftstroms und somit ein effizienter Ladebetrieb gewährleistet werden können.

Zur Übertragung der im Heizbetrieb des Heizgeräts bereitgestellten Wärme auf ein Fahrzeug wird vorgeschlagen, dass dem Heizgerät eine Heizmediumleitungsanordnung zum Leiten von aus dem Heizgerät abgegebenem Heizmedium in ein Fahrzeug zugeordnet ist.

Dabei kann vorgesehen sein, dass die Heizmediumleitungsanordnung einen Heizmedium vom Heizgerät weg leitenden vorzugsweise flexiblen Leitungsbereich umfasst, oder/und dass die Heizmediumleitungsanordnung eine Heizmediumabgabeanordnung zur Abgabe von Heizmedium in ein Fahrzeug umfasst.

Bei einer den flexiblen Einsatz des erfindungsgemäßen Fahrzeugheizsystems unterstützenden Ausgestaltung wird vorgeschlagen, dass die Heizmediumabgabeanordnung an einem Fahrzeug vorzugsweise im Bereich eines geöffneten Fensters lösbar angebracht oder anbringbar ist. Alternativ kann die Heizmediumabgabeanordnung an einem Fahrzeug fest installiert sein und eine Schnittstelle zum Anschluss des Leitungsbereichs umfassen.

Um das von dem Heizgerät abgegebene Medium durch die Mediumleitkanäle hindurch in den von der Hülle umkleideten Innenraum abzugeben, wird vorgeschlagen, dass in den Medium leitkanälen Öffnungen zur Abgabe von diese durchströmendem Medium in den von der Hülle umkleideten Innenraum vorgesehen sind.

Die Hülle kann wenigstens eine mit Luft füllbare Hüllen-Formgebungskammer umfassen. Dabei ist vorzugsweise ein Gebläse zum Fördern von Luft in die wenigstens eine Hüllen-Formgebungskammer oder/und wenigstens ein Ventil zum Halten von Luft in der wenigstens einen Hüllen-Formgebungskammer vorgesehen.

Um die durch das im Heizgerät erwärmte Medium auf ein Fahrzeug übertragene Wärme in einem Innenraum des Fahrzeugs gleichmäßig zu verteilen, wird vorgeschlagen, dass eine in einem zu erwärmenden Fahrzeuginnenraum angeordnete oder anordenbare Luftförderereinheit mit wenigstens einem elektrisch betreibbaren Gebläse vorgesehen ist.

Zur Versorgung der Luftfördereinheit mit elektrischer Energie kann die Luftfördereinheit mit wenigstens einem dem Heizgerät zugeordneten elektrischen Energiespeicher gekoppelt oder koppelbar sein.

Insbesondere dann, wenn ein derartiger elektrischer Energiespeicher beispielsweise im Heizungsaufnahmebehälter, also außerhalb des zu erwärmenden Fahrzeugs, angeordnet ist, kann zur Ankopplung an den wenigstens einen elektrischen Energiespeicher eine drahtlose Kopplungsstrecke vorgesehen sein.

Der Heizungsaufnahmebehälter ist vorzugsweise ausgebildet zur Anbringung:
- an einem Fahrzeugdach, also als Dachbox, oder/und
- an einer Anhängerkupplung, oder/und
- im Bereich eines geöffneten Fahrzeugfensters, oder/und
- in einem Fahrzeug-Heckbereich.

Um für einen effizienten Betrieb des Heizgeräts oder/und den Transport von Gegenständen geeignete thermische Bedingungen gewährleisten zu können, kann das Heizgerät zur Erwärmung des Innenraums des Heizungsaufnahmebehälters ausgebildet sein.

Die vorliegende Erfindung wird nachfolgend mit Bezug auf die beiliegenden Darstellungen detailliert beschrieben. Es zeigt:
- Fig. 1: in prinzipieller Darstellung ein mit einem erfindungsgemäßen Fahrzeugheizsystem ausgestattetes Fahrzeug;
- Fig. 2: eine der Fig. 1 entsprechende Darstellung mit einem alternativ ausgestalteten erfindungsgemäßen Fahrzeugheizsystem;
- Fig. 3: eine Ansicht eines mit einem Fahrzeugheizsystem ausgestatteten Fahrzeugs, welche die Einleitung von erwärmter Luft in den Fahrzeuginnenraum veranschaulicht;
- Fig. 4: eine Frontansicht eines mit einem Fahrzeugheizsystem ausgestatteten Fahrzeugs;
- Fig. 5: eine weitere Seitenansicht eines mit einem Fahrzeugheizsystem ausgestatteten Fahrzeugs;
- Fig. 6: eine Draufsicht auf ein mit einem erfindungsgemäßen Fahrzeugheizsystem ausgestatteten Fahrzeug, wobei das Fahrzeugheizsystem eine das Fahrzeug umkleidende Hülle umfasst;
- Fig. 7: eine Seitenansicht eines mit einem erfindungsgemäßen Fahrzeugheizsystem mit Hülle ausgestatteten Fahrzeugs;
- Fig. 8: eine der Fig. 7 entsprechende Darstellung, bei welcher das erfindungsgemäße Fahrzeugheizsystem eine ein Fahrzeug nur teilweise umkleidende Hülle umfasst;
- Fig. 9: eine Teil-Schnittdarstellung einer Hülle;
- Fig. 10: eine der Fig. 9 entsprechende Darstellung einer alternativen Ausgestaltungsart der Hülle;
- Fig. 11: die Hülle der Fig. 10, betrachtet in anderer Blickrichtung;
- Fig. 12: eine Teil-Ansicht eines Fahrzeugs mit einem erfindungsgemäßen Fahrzeugheizsystem mit einer das Fahrzeug teilweise umkleidenden Hülle und einer im Inneren des Fahrzeugs angeordneten Luftfördereinheit.

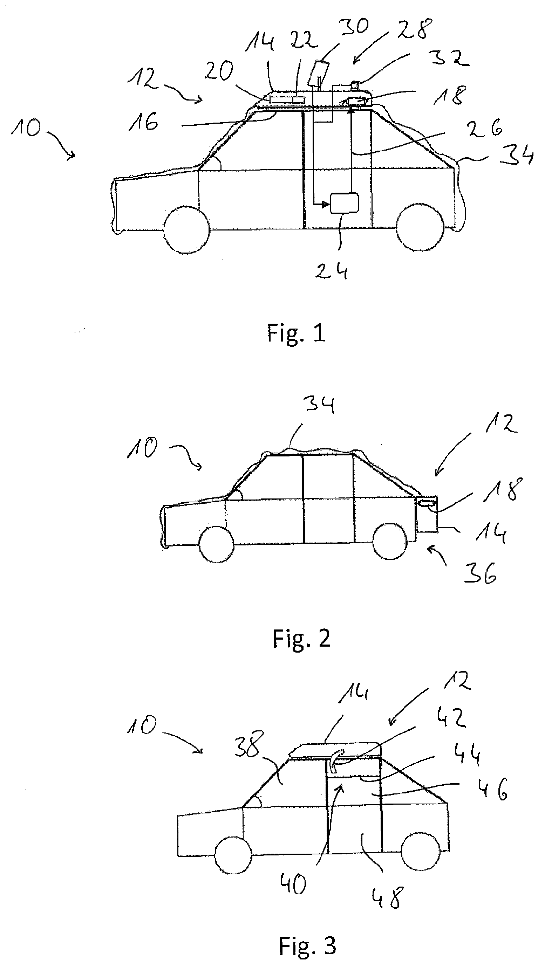

Die Fig. 1 zeigt in prinzipieller Darstellung ein Fahrzeug 10 mit einem daran vorgesehenen Fahrzeugheizsystem 12. Das Fahrzeugheizsystem 12 ist im Wesentlichen autark vom Fahrzeug 10 ausgebildet bzw. betreibbar und umfasst einen außen am Fahrzeug 10 angebrachten bzw. anbringbaren Heizungsaufnahmebehälter 14. Dieser ist in dem in Fig. 1 dargestellten Beispiel als Dachbox ausgebildet und am Dach 16 des Fahrzeugs 10, beispielsweise einer Dachreling, angebracht.

Im Inneren des Heizungsaufnahmebehälters ist ein allgemein mit 18 bezeichnetes, brennstoffbetriebenes Heizgerät angeordnet. Das Heizgerät umfasst ein Verbrennungsluftgebläse, welches einer Brennkammerbaugruppe des Heizgeräts 18 die zur Verbrennung erforderliche Luft zuführt. Im Inneren des Heizungsaufnahmebehälters 14 ist in Zuordnung zu dem Heizgerät 18 ferner ein Brennstofftank 20 vorgesehen, in welchem der zur Verbrennung mit der Verbrennungsluft erforderliche Brennstoff gespeichert werden kann. Durch eine Brennstoffpumpe 22, beispielsweise Dosierpumpe, kann dieser Brennstoff der Brennkammerbaugruppe des Heizgeräts 18 zugeführt werden, um darin ein Gemisch aus Verbrennungsluft und Brennstoff zu bilden. Durch ein nicht dargestelltes Abgasführungssystem kann das bei der Verbrennung entstehende Abgas aus dem Heizgerät 18 und dem Heizgerätaufnahmebehälter nach außen hin abgegeben werden.

Es ist darauf hinzuweisen, dass ein derartiges Heizgerät 18 im Allgemeinen auch einen Wärmetauscher umfasst, in welchem das zu erwärmende Medium, also beispielsweise die in einen Fahrzeuginnenraum einzuleitende Luft, Wärme von dem Verbrennungsabgas aufnimmt. Ein derartiger Wärmetauscher kann ein Wärmetauschergehäuse umfassen, das an seiner Innenseite von dem Verbrennungsabgas und an seiner Außenseite bzw. einem darin gebildeten Wärmeträgermedium-Strömungsvolumen von dem zu erwärmenden Medium umströmbar bzw. durchströmbar ist. Eine zur Umgebung offene Leitung kann in dem Falle, in welchem Luft als zu erwärmendes Medium genutzt wird, diese durch ein Gebläse geförderte Luft zu dem im Inneren des Heizungsaufnahmebehälters angeordneten Heizgerät 18 leiten.

Dem Heizgerät 18 ist ferner ein Ansteuergerät zugeordnet, welches beispielsweise in das Heizgerät 18 integriert sein kann und den Betrieb verschiedener Systembereiche des Heizgeräts 18 steuert bzw. regelt. Diese Systembereiche können beispielsweise die Dosierpumpe 22, ein Zündorgan, also beispielsweise einen Glühstift, das Verbrennungsluftgebläse, und, sofern das Heizgerät 18 zur Erwärmung von Luft dient, auch das Gebläse zum Fördern der erwärmten bzw. der zu erwärmenden Luft umfassen.

Um diese elektrisch betreibbaren Systembereiche mit elektrischer Energie zu versorgen, umfasst das Fahrzeugheizsystem 12 ferner wenigstens einen elektrischen Energiespeicher 24, also beispielsweise einen Akkumulator oder dergleichen. In dem in Fig. 1 dargestellten Beispiel kann dieser elektrische Energiespeicher 24 im Inneren des Fahrzeugs 10 selbst untergebracht sein und durch eine aus dem Fahrzeug 10 heraus zu führende elektrische Leitung 26 elektrisch an die im Inneren des Heizungsaufnahmebehälters 14 untergebrachten elektrisch zu betreibenden Systembereiche des Fahrzeugheizsystems 12 angeschlossen sein. Es ist darauf hinzuweisen, dass selbstverständlich der oder ggf. ein weiterer elektrischer Energiespeicher 24 im Inneren des Heizungsaufnahmebehälters 14 untergebracht sein kann, so dass ggf. eine elektrische Leitungsverbindung in das Innere des Fahrzeugs 10 entfallen kann.

Der elektrische Energiespeicher 24 kann im Fahrzeugheizsystem 12 fest verbaut sein. Vorzugsweise ist der elektrische Energiespeicher 24 jedoch so gestaltet, dass er grundsätzlich vom Fahrzeugheizsystem 12 entfernt werden kann und über eine Schnittstelle elektrisch mit den elektrisch zu betreibenden Systembereichen des Fahrzeugheizsystems 12 gekoppelt werden kann. Dies gestattet es, den elektrischen Energiespeicher zum Aufladen vom Fahrzeugheizsystem 12 bzw. vom Fahrzeug 10 zu entfernen und in einem Gebäude über eine entsprechende Ladestation aufzuladen.

Um den elektrischen Energiespeicher 24 zu laden, kann alternativ oder zusätzlich auch vorgesehen sein, dass das Fahrzeugheizsystem 12 eine allgemein mit 28 bezeichnete Ladeeinheit umfasst. Durch diese Ladeeinheit 28 kann dem elektrischen Energiespeicher 24 auch während des Heizbetriebs des Fahrzeugheizsystems 12 bzw. auch während des Fahrbetriebs des Fahrzeugs 10 elektrische Energie zum speichern zugeführt werden.

Die Ladeeinheit 28 kann beispielsweise ein Solarmodul 30 umfassen. Das Solarmodul 30 ist vorzugsweise am Heizungsaufnahmebehälter 14 getragen. Beispielsweise kann dem Solarmodul 30 ein Antrieb zugeordnet sein, durch welchen dieses aus- und eingefahren werden kann und selbständig nach dem Sonnenstand ausgerichtet werden kann, so dass ein effizienter Ladebetrieb gewährleistet ist. Alternativ oder zusätzlich kann die Ladeeinheit 28 eine Windradeinheit 32 umfassen. Auch diese ist vorzugsweise am Heizungsaufnahmebehälter 14 derart getragen, dass durch einen dieser zugeordneten Antrieb die Windradeinheit bezüglich des den Heizungsaufnahmebehälter 14 umströmenden Luftstroms so ausgerichtet werden kann, dass ein effizienter Ladebetrieb gewährleistet ist.

Die Fig. 1 veranschaulicht weiter, dass das Fahrzeugheizsystem eine im dargestellten Beispiel das Fahrzeug 10 im Wesentlichen vollständig umkleidende Hülle 34 umfasst. Diese ist erfindungsgemäß an den Heizungsaufnahmebehälter 14 angebunden und weist eine derartige Formgebung auf, dass sie bis in den unteren Randbereich einer Karosserie des Fahrzeugs 10 reicht. Die Hülle 34 verhindert einerseits, dass bei einem im Freien abgestellten Fahrzeug und bei niedrigen Umgebungstemperaturen an der Außenseite des Fahrzeugs 10 sich eine Eisschicht bildet. Andererseits bildet die Hülle 34 eine thermische Isolierung, welche in nachfolgend noch detaillierter beschriebener Art und Weise gewährleistet, dass das vom Heizgerät 18 abgegebene erwärmte Medium, also beispielsweise erwärmte Luft, effizient zur Erwärmung des Fahrzeugs 10 genutzt werden kann.

Die Fig. 2 zeigt eine alternative Ausgestaltung des Fahrzeugheizsystems 10. Bei der in Fig. 2 dargestellten Ausgestaltung ist der Heizungsaufnahmebehälter 14 mit den darin untergebrachten Systembereichen, insbesondere dem Heizgerät 18, im Heckbereich 36 des Fahrzeugs, beispielsweise auf einer nicht dargestellten Anhängerkupplung oder an einer Heckklappe oder einem Kofferraumdeckel des Fahrzeugs 10, getragen. Auch bei dieser Ausgestaltung kann das Fahrzeug 10 durch eine Hülle 34 umkleidet sein.

Die Fig. 3 veranschaulicht als vergleichendes Beispiel, wie das vom Heizgerät 18 erwärmte Medium, im dargestellten Beispiel erwärmte Luft, in einen Innenraum 38 des Fahrzeugs 10 eingeleitet werden kann. Dazu ist eine allgemein mit 40 bezeichnete Heizmediumleitungsanordnung vorgesehen. Diese umfasst einen vom Heizgerät 18 weg und aus dem Heizungsaufnahmebehälter 14 heraus führenden, vorzugsweise flexiblen Leitungsbereich 42, welcher die vom Heizgerät 18 erwärmte Luft in Richtung zu einer Heizmediumabgabeanordnung 44 leitet. Die Heizmediumabgabeanordnung 44 ist in dem in Fig. 3 dargestellten Beispiel so gestaltet, dass sie grundsätzlich vom Fahrzeug 10 losgelöst ausgebildet ist und beispielsweise im Bereich eines geöffneten Fensters 46 des Fahrzeugs 10 angeordnet werden kann. Die Heizmediumabgabeanordnung 44 kann beispielsweise einen kastenartigen Behälter umfassen, der die über den Leitungsbereich 42 herangeförderte, erwärmte Luft aufnimmt und über eine Mehrzahl von dem Fahrzeuginnenraum 38 zugewandt zu positionierenden Öffnungen in den Fahrzeuginnenraum 38 abgibt. Dabei kann die Heizmediumabgabeanordnung 44 beispielsweise durch das Fenster 46 geklemmt und somit beispielsweise im Bereich einer Türe 48 des Fahrzeugs 10 festgehalten werden.

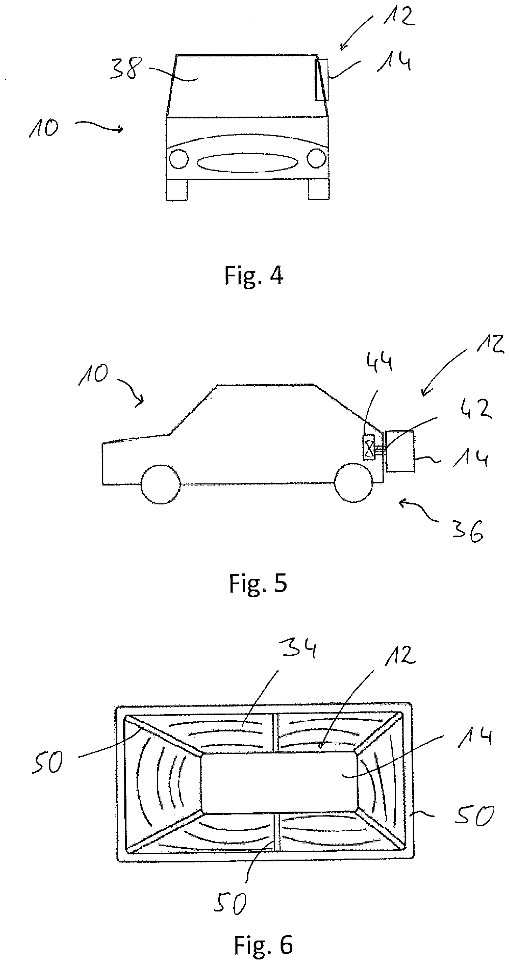

Eine weitere nicht erfindungsgemäße Ausgestaltungsart des Fahrzeugheizsystems 12 ist in Fig. 4 veranschaulicht. Bei diesem Ausgestaltungsbeispiel ist der Heizungsaufnahmebehälter 14 so gestaltet bzw. dimensioniert, dass er ähnlich, wie vorangehend mit Bezug auf die Fig. 3 beschrieben, im Bereich eines geöffneten Fensters des Fahrzeugs 10 untergebracht werden kann und beispielsweise durch ein Fenster festgeklemmt werden kann. Im Inneren des Heizungsaufnahmebehälters 14 ist das Heizgerät 18 mit den vorangehend auch beschriebenen und diesem zugeordneten Systembereichen, insbesondere auch dem Brennstofftank 20 und der Brennstoffpumpe 22, angeordnet. Um das erwärmte Medium, im dargestellten Beispiel also Luft, in den Innenraum 38 des Fahrzeugs 10 abzugeben, kann der Heizungsaufnahmebehälter an seiner dem Innenraum 38 zugewandten Seite eine oder mehrere Öffnungen aufweisen, durch welche hindurch die erwärmte Luft aus dem Heizungsaufnahmebehälter herausgeführt werden kann. Alternativ oder zusätzlich kann ein vom Heizgerät wegführender Leitungsbereich durch den Heizungsaufnahmebehälter 14 hindurch zu einer in diesen gebildeten Öffnung geführt sein, um in diesem Bereich dann die erwärmte Luft in den Fahrzeuginnenraum 38 abgeben zu können.

Eine weitere nicht erfindungsgemäße Ausgestaltung ist in Fig. 5 dargestellt. Auch hier ist der Heizungsaufnahmebehälter im Heckbereich 36 des Fahrzeugs 10 angeordnet. Die Heizmediumabgabeanordnung 44 ist in diesem Ausgestaltungsbeispiel fahrzeugfest installiert und über eine Schnittstelle mit dem die erwärmte Luft bzw. das erwärmte Medium aus dem Heizungsaufnahmebehälter 14 heraus führenden Leitungsbereich 42 koppelbar. Insbesondere kann die Ausgestaltung derart sein, dass automatisch dann, wenn der Heizungsaufnahmebehälter 14 am Fahrzeug 10 angebracht wird, eine Verbindung zwischen dem Leitungsbereich 42 und der Heizmediumabgabeanordnung 44 generiert wird.

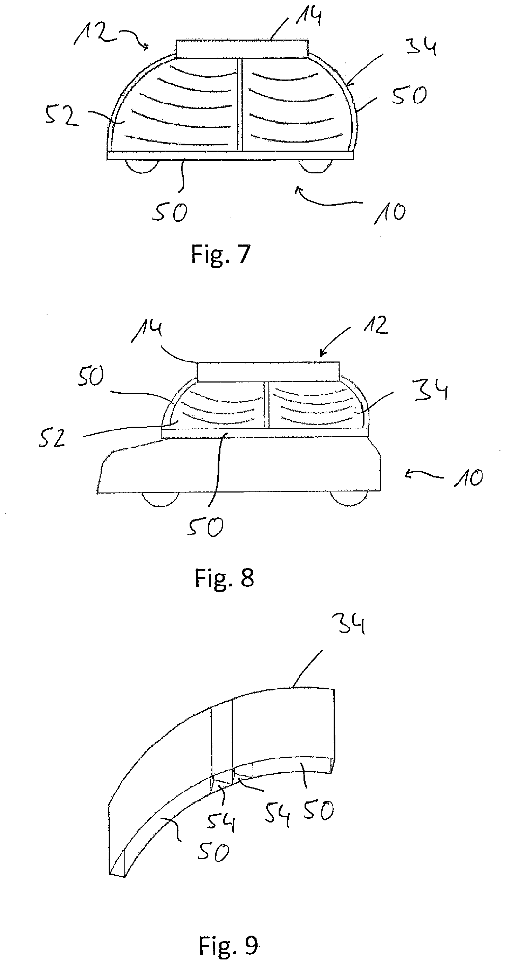

Die Fig. 6 und 7 zeigen die Ausgestaltung des Fahrzeugheizsystems 10 mit einer das Fahrzeug 10 im Wesentlichen vollständig umkleidenden Hülle 34. Während bei dem beispielsweise in Fig. 1 dargestellten Ausgestaltungsbeispiel die Hülle 34 so gestaltet ist, dass sie aufgrund ihrer Flexibilität an der Außenseite des Fahrzeugs 10 anliegt bzw. dort aufliegt, ist die in den Fig. 6 und 7 dargestellte Hülle 34 so gestaltet, dass sie insbesondere im Betrieb des Fahrzeugheizsystems 12 eine von der Form des Fahrzeugs im Wesentlichen unabhängige Form annimmt. Zu diesem Zwecke kann die beispielsweise im oberen Bereich an den Heizungsaufnahmebehälter 14 angebundene Hülle 34 eine Mehrzahl von Hüllen-Formgebungskammern 50 aufweisen, in welche durch ein beispielsweise im Heizungsaufnahmebehälter 14 untergebrachtes, separat vom Heizgerät ausgebildetes Gebläse Luft gefördert wird, welches beispielsweise auch aus dem dem Heizgerät 18 zugeordneten elektrischen Energiespeicher mit elektrischer Energie gespeist werden kann. Durch den so aufgebauten Luftdruck, der beispielsweise durch das während des Heizbetriebs fortwährend betriebene Gebläse aufrechterhalten werden kann, nehmen die Hüllen-Formgebungskammern eine definierte Gestalt an, welche beispielsweise dafür sorgt, dass zwischen der Innenseite der Hülle 34 und der Außenseite des Fahrzeugs 10 ein Luftpolster entsteht.

Bei einer insbesondere für einen energiesparenden Betrieb besonders vorteilhaften Variante kann vorgesehen sein, dass das Gebläse zum Aufbauen des Drucks in der bzw. den Hüllen-Formgebungskammern nur zum Fördern von Luft und zum Aufbauen des Drucks betrieben wird. Um den Luftdruck in der bzw. den Hüllen-Formgebungskammern zu halten, kann wenigstens ein das Entweichen von Luft unterbindendes Ventil vorgesehen sein. Das Gebläse kann zum Aufbauen des Luftdrucks Luft über dieses Ventil hinweg fördern. Bei in der bzw. den Hüllen-Formgebungskammern aufgebautem Luftdruck und nach Deaktivieren des Gebläses fehlendem Förderdruck kann das Ventil selbsttätig in einen Sperrzustand übergehen. Zum Ablassen von Luft aus der bzw. den Hüllen-Formgebungskammern kann ein derartiges Ventil beispielsweise durch manuelle Betätigung oder durch Aktivieren eines dem Ventil zugeordneten Aktuators in einen Freigabezustand gebracht werden, in welchem Luft aus der bzw. den Hüllen-Formgebungskammern entweichen kann. Auch können mehrere Ventile vorgesehen sein, wobei über eines oder mehrere der Ventile Luft in die Hüllen-Formgebungskammer/n gefördert werden kann und über ein oder mehrere andere Ventile Luft aus der/den Hüllen-Formgebungskammer/n abgelassen werden kann.

Während bei dem in den Fig. 6 und 7 dargestellten Ausgestaltungsbeispiel der von der Hülle 34 umkleidete Innenraum 52 das Fahrzeug 10 im Wesentlichen vollständig aufnimmt, ist bei dem in Fig. 8 dargestellten Ausgestaltungsbeispiel die Hülle 34 so gestaltet, dass nur der insbesondere auch die Fenster des Fahrzeugs umfassende obere Bereich in diesem Innenraum 52 aufgenommen und von der Hülle 34 umkleidet ist.

Die Fig. 9 zeigt einen Abschnitt der Hülle 34 mit den darin gebildeten Hüllen-Formgebungskammern 50, in welche durch das bereits angesprochene Gebläse Luft gefördert wird, um der Hülle 34 die gewünschte Form zu geben. Ferner verlaufen in der Hülle 34 Mediumleitkanäle 54, in welche das vom Heizgerät 18 erwärmte Medium, insbesondere also erwärmte Luft, eingeleitet wird. Das die Mediumleitkanäle 54 durchströmende Medium kann die darin transportierte Wärme über die Hülle 34 auf die in dem umkleideten Innenraum 52 vorhandene Luft übertragen, wodurch wiederum das in diesem Innenraum 52 positionierte Fahrzeug erwärmt wird. Beispielsweise kann vorgesehen sein, dass das Medium die Mediumleitkanäle 54 im unteren Bereich der Hülle 34 verlässt.

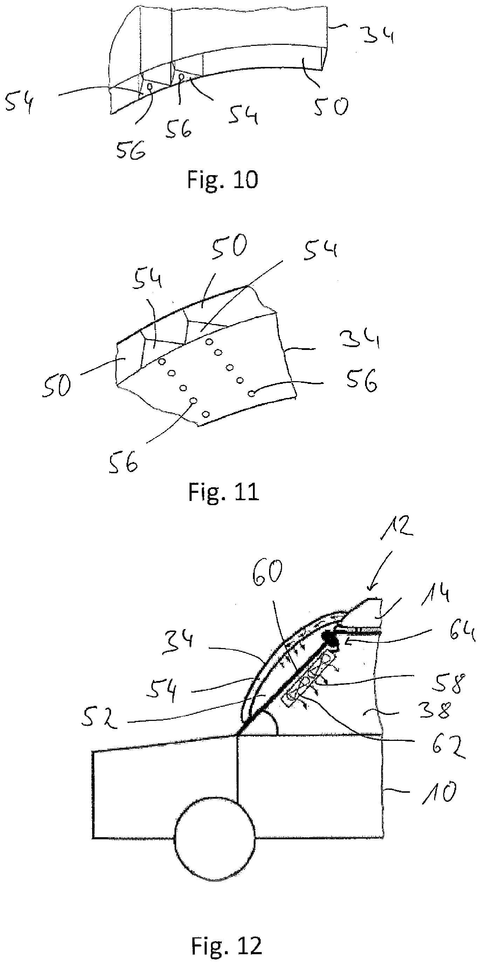

Die Fig. 10 und 11 zeigen in Zuordnung zu den Mediumleitkanälen 54 Öffnungen 56, über welche das Medium, also beispielsweise die erwärmte Luft, in den von der Hülle 34 umkleideten Innenraum 52 austreten kann. Somit wird ein direkter thermischer Kontakt des in den Innenraum 52 eintretenden erwärmten Mediums mit dem von der Hülle 34 umkleideten Bereich des Fahrzeugs 10 ermöglicht, wie in Fig. 12 dargestellt.

Um zu gewährleisten, dass die auf das Fahrzeug 10 übertragene Wärme im Fahrzeuginnenraum 38 gleichmäßig verteilt wird, kann das Fahrzeugheizsystem 12 ferner eine im Fahrzeuginnenraum 38 positionierte oder positionierbare Luftfördereinheit 58 umfassen. Diese kann beispielsweise im Bereich einer Windschutzscheibe 60 des Fahrzeugs positioniert werden und ein oder mehrere elektrisch betreibbare Gebläse 62 umfassen, welche aus demjenigen Bereich des Fahrzeugs 10 bzw. des Fahrzeuginnenraums 38, in welchem dort vorhandene Luft primär erwärmt wird, erwärmte Luft weg in andere Bereiche des Fahrzeuginnenraums 38 fördert.

Um die Luftfördereinheit 58 mit elektrischer Energie zu speisen, kann diese an einen dem Fahrzeugheizgerät 18 zugeordneten elektrischen Energiespeicher angeschlossen werden. Ist dieser, wie in Fig. 1 veranschaulicht, im Inneren des Fahrzeugs 10 untergebracht, kann die elektrische Kopplung der Luftfördereinheit 58 mit dem elektrischen Energiespeicher direkt durch eine an diesen anzuschließende elektrische Leitung erfolgen. Ist, wie in Fig. 12 veranschaulicht, ein derartiger elektrischer Energiespeicher im Heizungsaufnahmebehälter 14, also außerhalb des Fahrzeugs 10 angeordnet, kann die elektrische Verbindung zwischen dem elektrischen Energiespeicher und der Luftfördereinheit 58 eine beispielsweise im Bereich der Windschutzscheibe positionierte drahtlose Kopplungsstrecke 64 umfassen. Über diese drahtlose Kopplungsstrecke 64 kann elektrische Energie beispielsweise durch elektromagnetische Wechselwirkung zwischen einem außerhalb des Fahrzeuginnenraums 38 positionierten Leitungsbereich und einem innerhalb des Fahrzeuginnenraums 38 positionierten Leitungsbereich übertragen werden.

Das vorangehend beschriebene Fahrzeugheizsystem gestattet einen vom zu erwärmenden Fahrzeug bzw. von Systembereichen eines derartigen Fahrzeugs im Wesentlichen unabhängigen Betrieb. Das Fahrzeugheizsystem bzw. dessen Systembereiche sind grundsätzlich nicht mit Systembereichen des Fahrzeugs verknüpft, beispielsweise um das Fahrzeugheizsystem mit elektrischer Energie oder mit Brennstoff zu speisen oder dem Fahrzeugheizsystem Informationen über den thermischen Zustand des Fahrzeugs aus dem elektrischen System des Fahrzeugs zuzuführen. Dies gestattet es, ein derartiges Fahrzeugheizsystem in Verbindung mit verschiedenen Fahrzeugen zu nutzen. Ferner wird eine Belastung der im Fahrzeug vorgesehenen Energiespeicher bzw. auch ein Verbrauch des für den Betrieb des Fahrzeugs vorgesehenen Brennstoffs vermieden. Aufgrund dieser vom Fahrzeug unabhängig gewährleisteten Betreibbarkeit des Fahrzeugheizsystems kann dieses nicht nur bei verschiedenen Fahrzeugen eingesetzt werden, sondern kann insbesondere auch in Verbindung mit elektromotorisch zu betreibenden Fahrzeugen verwendet werden, welche im Allgemeinen keinen Brennstofftank aufweisen.

## Patentansprüche

1. Fahrzeugheizsystem, umfassend:
- einen an einem Fahrzeug (10) angebrachten oder anbringbaren Heizungsaufnahmebehälter (14),
- ein in dem Heizungsaufnahmebehälter (14) angeordnetes, brennstoffbetriebenes Heizgerät (18),
- einen in dem Heizungsaufnahmebehälter (14) angeordneten Brennstofftank (20) für das Heizgerät (18),
**dadurch gekennzeichnet, dass** an den Heizungsaufnahmebehälter (14) eine ein Fahrzeug (10) wenigstens teilweise umkleidende, flexible Hülle (34) vorgesehen ist, und dass das von dem Heizgerät (18) abgegebene Medium in einen von der Hülle (34) umkleideten Innenraum (52) abgegeben wird, oder/und dass das von dem Heizgerät (18) abgegebene Medium in in der Hülle (34) vorgesehene Mediumleitkanäle (54) abgegeben wird.

2. Fahrzeugheizsystem nach Anspruch 1,
**dadurch gekennzeichnet, dass** dem Heizgerät (18) ein in dem Heizungsaufnahmebehälter (14) angeordnetes Ansteuergerät oder/und eine in dem Heizungsaufnahmebehälter (14) angeordnete Brennstoffpumpe (22) oder/und wenigstens ein elektrischer Energiespeicher (24) zugeordnet ist.

3. Fahrzeugheizsystem nach Anspruch 2,
**dadurch gekennzeichnet, dass** wenigstens ein elektrischer Energiespeicher in dem Heizungsaufnahmebehälter (14) angeordnet ist, oder/und dass wenigstens ein elektrischer Energiespeicher (24) in einem den Heizungsaufnahmebehälter (14) tragenden Fahrzeug (10) angeordnet ist, oder/und dass wenigstens ein elektrischer Energiespeicher (24) von dem Fahrzeugheizsystem (12) entfernbar und an dieses über eine Schnittstelle elektrisch anschließbar ist.

4. Fahrzeugheizsystem nach Anspruch 2 oder 3,
**dadurch gekennzeichnet, dass** wenigstens einem elektrischen Energiespeicher (24) eine Ladeeinheit (28) zugeordnet ist.

5. Fahrzeugheizsystem nach Anspruch 4,
**dadurch gekennzeichnet, dass** die Ladeeinheit (28) ein an dem Heizungsaufnahmebehälter (14) vorzugsweise positionsveränderbar getragenes Solarmodul (30) oder/und eine an dem Heizungsaufnahmebehälter (14) vorzugsweise positionsveränderbar getragene Windradeinheit (32) umfasst.

6. Fahrzeugheizsystem nach einem der vorangehenden Ansprüche,
**dadurch gekennzeichnet, dass** dem Heizgerät (18) eine Heizmediumleitungsanordnung (40) zum Leiten von aus dem Heizgerät (18) abgegebenem Heizmedium in ein Fahrzeug (10) zugeordnet ist.

7. Fahrzeugheizsystem nach Anspruch 6,
**dadurch gekennzeichnet, dass** die Heizmediumleitungsanordnung (40) einen Heizmedium vom Heizgerät (18) weg leitenden vorzugsweise flexiblen Leitungsbereich (42) umfasst, oder/und dass die Heizmediumleitungsanordnung (40) eine Heizmediumabgabeanordnung (44) zur Abgabe von Heizmedium in ein Fahrzeug (10) umfasst.

8. Fahrzeugheizsystem nach Anspruch 7,
**dadurch gekennzeichnet, dass** die Heizmediumabgabeanordnung (44) an einem Fahrzeug (10) vorzugsweise im Bereich eines geöffneten Fensters (46) lösbar angebracht oder anbringbar ist, oder dass die Heizmediumabgabeanordnung (44) an einem Fahrzeug (40) fest installiert ist und eine Schnittstelle zum Anschluss des Leitungsbereichs (42) umfasst.

9. Fahrzeugheizsystem nach einem der vorangehenden Ansprüche,
**dadurch gekennzeichnet, dass** in den Mediumleitkanälen (54) Öffnungen (56) zur Abgabe von diese durchströmendem Medium in den von der Hülle (34) umkleideten Innenraum (52) vorgesehen sind.

10. Fahrzeugheizsystem nach einem der Ansprüche 1-9,
**dadurch gekennzeichnet, dass** die Hülle (34) wenigstens eine mit Luft füllbare Hüllen-Formgebungskammer (50) umfasst, vorzugsweise wobei ein Gebläse zum Fördern von Luft in die wenigstens eine Hüllen-Formgebungskammer (50) oder/und wenigstens ein Ventil zum Halten von Luft in der wenigstens einen Hüllen-Formgebungskammer (50) vorgesehen ist.

11. Fahrzeugheizsystem nach einem der Ansprüche 1-10,
**dadurch gekennzeichnet, dass** eine in einem zu erwärmenden Fahrzeuginnenraum (38) angeordnete oder anordenbare Luftförderereinheit (58) mit wenigstens einem elektrisch betreibbaren Gebläse (62) vorgesehen ist.

12. Fahrzeugheizsystem nach Anspruch 11,
**dadurch gekennzeichnet, dass** die Luftfördereinheit (58) zur Versorgung mit elektrischer Energie mit wenigstens einem dem Heizgerät (18) zugeordneten elektrischen Energiespeicher gekoppelt oder koppelbar ist.

13. Fahrzeugheizsystem nach Anspruch 12,
**dadurch gekennzeichnet, dass** zur Ankopplung an den wenigstens einen elektrischen Energiespeicher eine drahtlose Kopplungsstrecke (64) vorgesehen ist.

14. Fahrzeugheizsystem nach einem der vorangehenden Ansprüche,
**dadurch gekennzeichnet, dass** der Heizungsaufnahmebehälter (14) ausgebildet ist zur Anbringung:
- an einem Fahrzeugdach (16), oder/und
- an einer Anhängerkupplung, oder/und
- im Bereich eines geöffneten Fahrzeugfensters (46), oder/und
- in einem Fahrzeug-Heckbereich (36),
oder/und
dass das Heizgerät (18) zur Erwärmung des Innenraums des Heizungsaufnahmebehälters (14) ausgebildet ist.

## Claims

1. A vehicle heating system, comprising:
- a heating device receptacle (14) attached or attachable at a vehicle (10),
- a fuel-operated heating device (18), disposed in the heating device receptacle (14),
- a fuel tank (20) for the heating device (18) disposed in the heating device receptacle (14),
**characterized in that** a flexible covering (34) at least partially covering a vehicle (10) is provided at the heating device receptacle (14) and **in that** the medium transferred from the heating device (18) is released into an interior (52) covered by the covering (34), and/or that the medium transferred from the heating device (18) is released into medium conducting ducts (54) provided in the covering (34)

2. Vehicle heating system in accordance with Claim 1,
**characterized in that** an actuation device disposed in the heating device receptacle (14) and/or a fuel pump (22) disposed in the heating device receptacle (14) and/or at least one electrical energy store (24) is assigned to the heating device (18).

3. Vehicle heating system in accordance with Claim 2,
**characterized in that** at least one electrical energy store is disposed in the heating device receptacle (14), and/or at least one electrical energy store (24) is disposed in a vehicle (10) carrying the heating device receptacle (14), and or that at least one electrical energy store (24) is removable from the vehicle heating system (12) and is electrically connectable to the vehicle heating system via an interface.

4. Vehicle heating system in accordance with Claim 2 or 3,
**characterized in that** a charging unit (28) is assigned to at least one electrical energy store (24).

5. Vehicle heating system in accordance with Claim 4,
**characterized in that** the charging unit (28) includes a preferably positionally changeable solar module (30) carried at the heating device receptacle (14) and/or a preferably positionally changeable wind turbine (32) carried at the heating device receptacle (14).

6. Vehicle heating system in accordance with one of the preceding claims,
**characterized in that** a heating medium duct arrangement (40) for conducting heating medium released from the heating device (18) into a vehicle (10) is assigned to the heating device (18).

7. Vehicle heating system in accordance with Claim 6,
**characterized in that** the heating medium duct arrangement (40) includes a preferably flexible duct area (42) guiding heating medium away from the heating device (18) and/or **in that** the heating medium duct arrangement (40) includes a heating medium transfer arrangement (44) for releasing heating medium into a vehicle (10).

8. Vehicle heating system in accordance with Claim 7,
**characterized in that** the heating medium transfer arrangement (44) is releasably attached or attachable to a vehicle (10) preferably in the area of an open window (46), or that the heating medium transfer arrangement (44) is fixedly installed at a vehicle and includes an interface for connecting the duct area (42).

9. Vehicle heating system in accordance with one of the preceding Claims,
**characterized in that** openings (56) for transferring medium through-flowing the same into the interior (52) covered by the covering (34) are provided in the medium conducting ducts (54).

10. Vehicle heating system in accordance with one of Claims 1-9,
**characterized in that** the covering (34) comprises at least one covering shaping chamber (50), preferably wherein a blower for conveying air into the at least one covering shaping chamber (50) and/or at least one valve for retaining air in the at least one covering shaping chamber (50) is provided.

11. Vehicle heating system in accordance with one of Claims 1-10,
**characterized in that** an air feed unit (58) is provided that is situated or can be situated in a vehicle interior (38) to be heated with at least one electrically operable blower (62).

12. Vehicle heating system in accordance with Claim 11,
**characterized in that** the air feed unit (58) for supplying electrical energy is coupled or can be coupled with at least one electrical energy store assigned to the heating device (18).

13. Vehicle heating system in accordance with Claim 12,
**characterized in that** for coupling to the at least one electrical energy store, a wireless coupling section (64) is provided.

14. Vehicle heating system in accordance with one of the preceding claims,
**characterized in that** the heating device receptacle (14) is configured to be attached
- to a vehicle roof (16), and/or
- to a trailer hitch, and/or
- in the area of an open window (46), and/or
- in a vehicle rear area (36),
and/or
that the heating device (18) is configured to heat the interior of the heating device receptacle (14).

## Revendications

1. Système de chauffage de véhicule, comprenant :
- un récipient de dispositif de chauffage (14) fixé ou pouvant être fixé à un véhicule (10),
- un appareil de chauffage à combustible (18), disposé dans le récipient de dispositif de chauffage (14),
- un réservoir de carburant (20) pour le dispositif de chauffage (18) disposé dans le récipient de dispositif de chauffage (14),
**caractérisé en ce qu'**un revêtement flexible (34) recouvrant au moins partiellement un véhicule (10) est prévu sur le récipient de dispositif de chauffage (14) et **en ce que** le médium transféré du dispositif de chauffage (18) est libéré dans un intérieur (52) recouvert par le revêtement (34), et/ou **en ce que** le médium transféré du dispositif de chauffage (18) est libéré dans des conduits conducteurs de médium (54) prévus dans le revêtement (34).

2. Système de chauffage de véhicule selon la revendication 1,
**caractérisé en ce qu'**un dispositif d'actionnement disposé dans le récipient de dispositif de chauffage (14) et/ou une pompe à carburant (22) disposée dans le récipient de dispositif de chauffage (14) et/ou au moins un accumulateur d'énergie électrique (24) sont associés au dispositif de chauffage (18).

3. Système de chauffage de véhicule selon la revendication 2,
**caractérisé en ce qu'**au moins un accumulateur d'énergie électrique est disposé dans le récipient de dispositif de chauffage (14) et/ou **en ce qu'**au moins un accumulateur d'énergie électrique (24) est disposé dans un véhicule (10) portant le récipient de dispositif de chauffage (14), et ou **en ce qu'**au moins un accumulateur d'énergie électrique (24) peut être retiré du système de chauffage (12) du véhicule et peut être relié électriquement au système de chauffage du véhicule par l'intermédiaire d'une interface.

4. Système de chauffage de véhicule selon les revendications 2 ou 3,
**caractérisé en ce qu'**une unité de charge (28) est affectée à au moins un accumulateur d'énergie électrique (24).

5. Système de chauffage de véhicule selon la revendication 4,
**caractérisé en ce que** l'unité de charge (28) comprend un module solaire (30), de préférence à position variable, porté par le récipient de dispositif de chauffage (14) et/ou une éolienne (32), de préférence à position variable, portée par le récipient de dispositif de chauffage (14).

6. Système de chauffage de véhicule selon l'une des revendications précédentes,
**caractérisé en ce que** le dispositif de chauffage (18) est associé un agencement de conduits de médium de chauffage (40) pour conduire le médium de chauffage libéré du dispositif de chauffage (18) dans un véhicule (10).

7. Système de chauffage de véhicule selon la revendication 6,
**caractérisé en ce que** l'agencement de conduit de médium de chauffage (40) comprend une zone de conduit de préférence flexible (42) guidant le médium de chauffage à l'écart du dispositif de chauffage (18) et/ou **en ce que** l'agencement de conduit de médium de chauffage (40) comprend un agencement de transfert de médium de chauffage (44) pour libérer le médium de chauffage dans un véhicule (10).

8. Système de chauffage de véhicule selon la revendication 7,
**caractérisé en ce que** le dispositif de transfert de médium de chauffage (44) est fixé ou peut être fixé de manière amovible à un véhicule (10), de préférence dans la zone d'une fenêtre ouverte (46), ou **en ce que** le dispositif de transfert de médium de chauffage (44) est installé de manière fixe sur un véhicule et comprend une interface pour relier la zone de conduit (42).

9. Système de chauffage de véhicule selon l'une des revendications précédentes,
**caractérisé en ce que** des ouvertures (56) sont prévues dans les conduits conducteurs de médium (54) pour transférer le médium qui les traverse dans l'intérieur (52) recouvert par le revêtement (34).

10. Système de chauffage de véhicule selon l'une des revendications 1 à 9,
**caractérisé en ce que** le revêtement (34) comprend au moins une chambre de formage de couverture (50), de préférence dans laquelle est prévue une soufflante pour amener de l'air dans ladite au moins une chambre de formage de couverture (50) et/ou au moins une soupape pour retenir l'air dans ladite au moins une chambre de formage de couverture (50).

11. Système de chauffage de véhicule selon l'une des revendications 1 à 10,
**caractérisé en ce qu'**il est prévu une unité d'alimentation en air (58) située ou pouvant être située dans un intérieur de véhicule (38) à chauffer, comportant au moins un ventilateur (62) à commande électrique.

12. Système de chauffage de véhicule selon la revendication 11,
**caractérisé en ce que** l'unité d'alimentation en air (58) pour l'alimentation en énergie électrique est couplée ou peut être couplée à au moins un accumulateur d'énergie électrique affecté au dispositif de chauffage (18).

13. Système de chauffage de véhicule selon la revendication 12,
**caractérisé en ce que** pour le couplage à au moins un accumulateur d'énergie électrique, une section de couplage sans fil (64) est prévue.

14. Système de chauffage du véhicule selon l'une des revendications précédentes,
**caractérisé en ce que** le récipient du dispositif de chauffage (14) est configuré pour être fixé
- sur le toit d'un véhicule (16), et/ou
- à un attelage de remorque, et/ou
- dans la zone d'une fenêtre ouverte (46), et/ou
- dans la zone arrière d'un véhicule (36),
et/ou que le dispositif de chauffage (18) est configuré pour chauffer l'intérieur du récipient de dispositif de chauffage (14).
